# DEMANDE DE BREVET EUROPEEN

(11) **EP 1 995 014 A1**
(43) Date de publication de la demande: **26.11.2008**
(21) Numéro de dépôt: 08290358.4
(22) Date de dépôt: 11.04.2008
(51) Int. Cl.: B23K 20/10, H01R 43/02

(54) **Assemblage barre-câble comportant un motif gravé**

(30) Priorité: 22.05.2007 FR 0703617
(71) Demandeur: Leoni Wiring Systems France, 78180 Montigny Le Bretonneux (FR)
(72) Inventeur: Moly, José, 31150 Gratentour (FR)
(74) Mandataire: Eidelsberg, Olivier Nathan

(57) **Abrégé**

Assemblage constitué de deux pièces (2,4) soudées l'une à l'autre par ultrasons, une surface de la première pièce comportant un motif gravé, le motif gravé étant constitué d'empreintes (7',7'',7''') de forme complémentaire d'un motif formé par moletage.

## Description

La présente invention se rapporte à l'assemblage d'une barre, notamment une barre bus, sensiblement rigide et de câbles sensiblement souples qui sont soudés à la barre, l'assemblage pouvant ainsi acheminer du courant ou des signaux électriques.

De tels assemblages soudés sont classiques et nombreux dans l'automobile. Ils sont simples à réaliser, notamment par une soudure à ultrasons principalement. Lorsque la barre et les câbles ont été soudés l'un à l'autre, il est habituel, pour le fabricant de pièces automobiles, d'apposer son nom ou sa marque sur une partie de l'assemblage, en particulier sous la forme d'une étiquette. Il peut également arriver qu'il grave son nom sur l'assemblage soudé. Dans un cas comme dans l'autre, cette étape de gravure ou d'apposition du nom ou de la marque est une étape supplémentaire dans le procédé, ce qui ralentit la fabrication dans son ensemble. En outre, lorsqu'une étiquette est utilisée, on obtient un produit final sur lequel un élément supplémentaire a été ajouté (l'étiquette), étiquette qui au cours du temps peut avoir tendance à se décoller ou de se détériorer. Dans le cas où l'on effectue une gravure sur l'assemblage pour le marquer, c'est la gravure elle-même qui peut détériorer l'assemblage.

La présente invention vise à surmonter les inconvénients de l'art antérieur en proposant un procédé d'assemblage d'une barre, notamment rigide, et de câbles, notamment souples, par soudure par ultrasons qui permet d'obtenir un produit constitué de la barre et des câbles qui y sont soudés et qui comporte également une inscription, telle qu'une marque ou un logo, et ce, sans étape d'inscription ou d'apposition d'étiquette supplémentaire et sans aucun risque de détérioration lié à une étape supplémentaire de gravure du logo ou de la marque sur l'assemblage. La présente invention vise également un assemblage pouvant être obtenu par un procédé suivant l'invention.

Suivant l'invention, un procédé pour souder une barre en un premier matériau, notamment en aluminium, ayant de préférence une forme sensiblement rigide et au moins un câble, de préférence sensiblement souple, notamment en cuivre, la soudure étant effectuée au niveau d'une interface de soudure entre le ou les câbles et la barre, consiste à prendre une sonotrode comportant une surface support pour supporter l'une des deux pièces, par exemple la barre, tandis que l'on fait subir une vibration à l'autre pièce, par exemple le ou les câbles, pour la souder à la pièce maintenue par le support, la surface du support en contact avec la première pièce étant moletée, c'est-à-dire comportant un réseau uniforme de microdents ou dentures faisant saillie de la surface et destinées à s'incruster dans la pièce supportée pour la maintenir en évitant un glissement relatif, et est caractérisé en ce que le réseau de microdents est agencé sur la surface du support de manière non uniforme, notamment de manière à former avec les microdents un motif non uniforme, de sorte que par incrustation des microdents dans la matière de la pièce supportée par le support, il est laissé sur la surface de cette matière une empreinte correspondant au motif non uniforme, par exemple un logo.

Suivant ce procédé, on obtient un produit final comportant une marque de fabrique ou un logo quelconque souhaité, sans avoir à prévoir des étapes supplémentaires qui consistent à imprimer ce logo sur une étiquette et à apposer l'étiquette sur le produit ou à graver le logo sur le produit, ce qui peut entraîner par inadvertance la destruction ou la détérioration du produit. En outre, l'inscription peut, à la place ou en plus d'un logo, constituer un marquage permettant de connaître par un signe distinctif la ligne de production et/ou être un moyen distinctif de production pour permettre de s'assurer que le produit ainsi marqué n'est pas une contrefaçon. Par exemple le marquage peut être constitué de deux points à distance l'un de l'autre d'un écartement donné.

La présente invention se rapporte également à une sonotrode pour effectuer une soudure à ultrasons de deux pièces l'une avec l'autre, comportant un support destiné à supporter et maintenir la première pièce et un élément mobile, notamment à déplacement rotatif ou linéaire, qui fait vibrer la deuxième pièce pendant que la première pièce est maintenue par le support, caractérisée en ce que le support, du côté de sa surface destinée à venir en contact avec la première pièce, comporte un réseau de microdents agencé de manière non uniforme et notamment formant un motif non uniforme quelconque donné, par exemple un logo, par exemple le logo VALEO.

La présente invention se rapporte également à un assemblage constitué de deux pièces soudées l'une à l'autre par ultrasons, notamment une barre sensiblement rigide et au moins un câble sensiblement souple, notamment en cuivre, une surface de la première pièce comportant un motif gravé non uniforme, le motif gravé non uniforme étant constitué d'empreintes de forme complémentaire d'un motif formé par moletage.

Suivant un mode de réalisation préféré, le motif est constitué d'un ou de plusieurs traits défini par une succession de trous séparés les uns des autres par de la matière de la première pièce, les trous étant notamment de forme complémentaire d'au moins une partie de dents ou microdents correspondant à l'incrustation d'au moins une partie d'une dent ou d'une microdent dans la matière de la surface.

De préférence, ladite une surface de la première pièce est d'un côté opposé à la surface sur laquelle est fixée la deuxième pièce.

Suivant un mode de réalisation préféré, un marquage est effectué sur au moins un des deux côtés de l'assemblage.

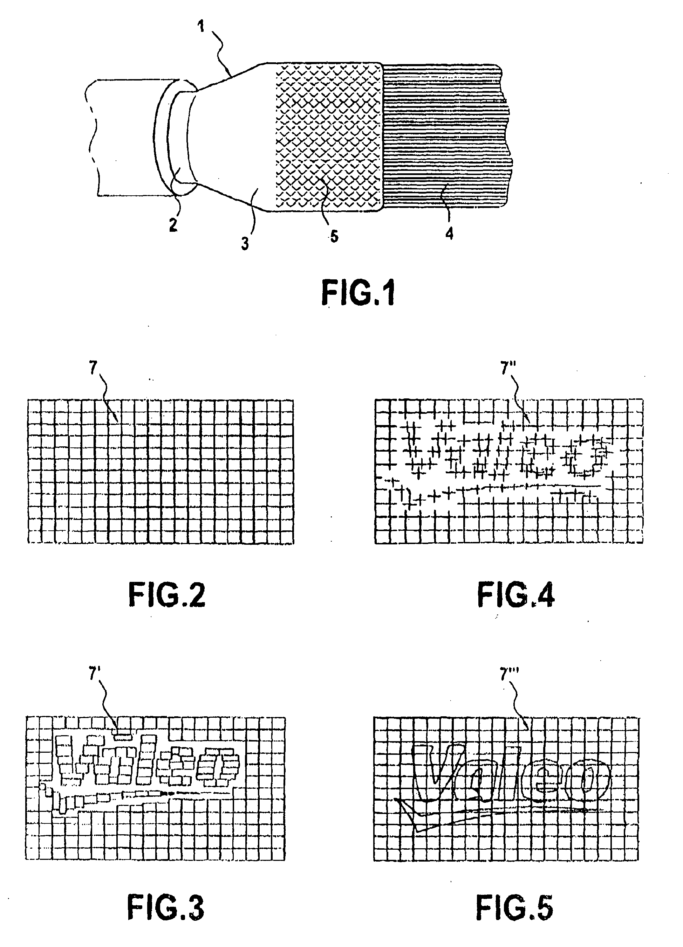

On décrit maintenant des modes de réalisation de l'invention, à titre d'exemple, en se reportant au dessin dans lequel : à la Figure 1, il est représenté de manière schématique l'assemblage d'une barre bus en aluminium à une pluralité de câbles souples en cuivre formant un câble multibrin ; la Figure 2 représente l'empreinte moletée laissée sur le câble par la surface moletée d'un support d'une sonotrode de l'art antérieur ; tandis que les Figures 3, 4 et 5 représentent une empreinte moletée équivalente, à celle de la Figure 1 mais laissée par une surface moletée d'un support comme suivant la présente invention, dans le cas où l'on souhaite former un logo VALEO.

Un assemblage 1 comporte une barre 2 de section cylindrique circulaire en aluminium ayant à son extrémité un méplat 3 de forme parallélépipédique sur lequel sont fixés par soudure par ultrasons, une pluralité de câbles 4 souples en cuivre. La surface 5 opposée à la surface sur laquelle sont fixés par soudure les câbles souples a été maintenue lors de la soudure sur un support de sonotrode ayant une surface moletée, de forme complémentaire et symétrique comme dans un miroir de l'empreinte 7.

Lors de la soudure à ultrasons, on maintient la barre 2 sur l'enclume ou support, notamment par attaque ou incrustation des dents ou microdents du moletage dans la matière de la barre, tandis que l'on fait vibrer de l'autre côté les câbles en cuivre, pour les fixer par soudure par ultrasons à la barre 2 sur sa partie méplate. Dans l'art antérieur, les microdents formant le moletage sur la surface 7 de l'empreinte ou sur la surface du support de la sonotrode sont agencées suivant un réseau uniforme, par exemple quadrillés, comme représenté à la figure 2.

Suivant l'invention, au contraire, les surfaces 7', 7" et 7"' correspondant respectivement aux Figures 3, 4 et 5 comportent des microdents agencées suivant un réseau qui n'est pas uniforme sur la surface. Les microdents y sont agencées de manière non uniforme, pour former une inscription avec des traits qui chacun sont constitués de successions de microdents ou aspérités individuelles disposées à la suite les unes des autres en étant séparées les unes des autres par des parties plates ou creuses. Les traits forment notamment des lettres. Ainsi, le L de VALEO est-il constitué, par exemple à la Figure 3, par une succession de six microdents alignées les unes avec les autres. Lorsque l'on retire le produit de la sonotrode et que la surface qui était supportée par le support quitte son contact avec celui-ci, il apparaît une empreinte complémentaire 7', 7" ou 7"' de l'inscription formée sur le support. Cette empreinte est constituée de traits formés par des trous de forme complémentaire de celle des dents, alignés les uns avec les autres pour former des lettres. Par exemple, le L de VALEO est constitué d'une série de six trous alignés ensemble pour former un L, les trous dans l'alignement étant séparés de leurs voisins respectifs par une partie pleine de la matière de la pièce, par exemple ici la barre 2.

Par l'art antérieur, on obtenait à la sortie de la sonotrode un motif constitué d'un quadrillage régulier ou uniforme de trous, qui donc ne formait pas une inscription. Si l'on souhaitait alors former une inscription, il fallait attaquer par gravure le motif uniforme des trous pour obtenir des traits du motif souhaité, qui ainsi étaient constitués de rainures continues et non pas d'une succession de trous séparés les uns des autres par de la matière. La matière était ainsi attaquée deux fois (une fois par la surface moletée lors de la soudure par ultrason, une fois par la gravure de l'inscription), ce qui pouvait entraîner une détérioration.

La soudure peut également être réalisée entre deux pièces toutes les deux souples ou toutes les deux rigides.

Le moletage est une opération de gravure au moyen d'une molette, entraînant un dessin répétitif, et suivant la présente invention, on entend par molette tout système d'usinage (laser, électroérosion...) donnant un dessin répétitif.

## Revendications

1. Assemblage constitué de deux pièces (2, 4) soudées l'une à l'autre par ultrasons, une surface de la première pièce comportant un motif gravé non uniforme, le motif gravé non uniforme étant constitué d'empreintes (7', 7", 7"') de forme complémentaire d'un motif formé par moletage.

2. Assemblage suivant la revendication 1, **caractérisé en ce que** le motif gravé est constitué de traits qui chacun sont constitués d'une succession de trous séparés les uns des autres par de la matière de la première pièce.

3. Assemblage suivant la revendication 2, **caractérisé en ce que** les trous ont une forme complémentaire d'au moins une partie de dents ou de microdents d'une surface moletée dont le réseau n'est pas uniforme.

4. Assemblage suivant l'une des revendications 1 à 3, **caractérisé en ce que** ladite une surface est d'un côté opposé à la surface sur laquelle est fixée la deuxième pièce.

5. Assemblage suivant l'une des revendications précédentes, **caractérisé en ce que** un marquage est effectué sur au moins un des deux côtés de l'assemblage.

6. Procédé pour souder une barre en un premier matériau, notamment en aluminium, de préférence sensiblement rigide et au moins un câble, de préférence souple, notamment en cuivre, la soudure étant effectuée au niveau d'une interface de soudure entre le ou les câbles et la barre et qui consiste à prendre une sonotrode comportant une surface support pour supporter l'une des deux pièces, par exemple la barre, tandis que l'on fait subir une vibration à l'autre pièce, par exemple le ou les câbles pour la souder à la pièce maintenue par le support, la surface du support en contact avec la première pièce étant moletée, c'est-à-dire comportant un réseau uniforme de microdents ou dentures faisant saillie de la surface et destinées à s'incruster dans la pièce supportée et la maintenir en évitant un glissement relatif, et **caractérisé en ce que** le réseau de microdents est agencé sur la surface du support de manière non uniforme, notamment de manière à former avec les microdents un motif non uniforme de sorte que, par incrustation des microdents dans la matière de la pièce supportée par le support, il est laissé sur la surface de cette matière une empreinte correspondant au motif non uniforme par exemple un logo.

7. Sonotrode pour effectuer une soudure à ultrasons de deux pièces l'une avec l'autre, comportant un support destiné à supporter et maintenir la première pièce et un élément mobile, notamment à déplacement rotatif ou linéaire, qui fait vibrer la deuxième pièce pendant que la première pièce est maintenue par le support, **caractérisée en ce que** le support, du côté de sa surface destinée à venir en contact avec la première pièce, comporte un réseau de microdents agencé de manière non uniforme et notamment formant un motif non uniforme quelconque donné, par exemple un logo, par exemple le logo VALEO.
